(19) **Europäisches Patentamt**
**European Patent Office**
**Office européen des brevets**

(11) **EP 4 765 039 A1**

(12) **EUROPEAN PATENT APPLICATION**

(43) Date of publication:
**24.06.2026 Bulletin 2026/26**

(21) Application number: **24220676.1**

(22) Date of filing: **17.12.2024**

(51) International Patent Classification (IPC):
**G06V 10/774** (2022.01)   **G06V 10/82** (2022.01)
**G06V 20/52** (2022.01)   **G06V 40/10** (2022.01)

(52) Cooperative Patent Classification (CPC):
**G06V 10/82; G06V 10/774; G06V 20/52;**
**G06V 40/103;** G06V 2201/03

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Koninklijke Philips N.V.**
**5656 AE Eindhoven (NL)**

(72) Inventors:
• **SOMMER, Karsten**
  **Eindhoven (NL)**
• **KRUEGER, Sascha**
  **Eindhoven (NL)**

(74) Representative: **Philips Intellectual Property &**
**Standards**
**High Tech Campus 34**
**5656 AE Eindhoven (NL)**

(54) **GENERATION OF SYNTHETIC TRAINING IMAGES FOR MEDICAL IMAGING**

(57)   Disclosed is a medical imaging method comprising receiving (200) reference medical camera data (122). The method further comprises receiving (202) reference anatomical keypoint data (126) by inputting the reference medical camera data into an anatomical keypoint detection neural network (124). The method comprises iteratively generating (204) synthetic medical camera data (138) by: generating (206) intermediate medical camera data (130) by inputting the reference medical camera data into an image synthesis machine learning module (128); receiving (208) intermediate anatomical keypoint data (132) from the anatomical keypoint detection neural network; calculating (210) a loss function (134) using the intermediate anatomical keypoint data and the reference anatomical keypoint data; providing (214) the intermediate medical camera data as synthetic medical camera data (138) if the loss function meets (212) a predetermined convergence criterion; and otherwise, modifying (216) the image synthesis machine learning module using the loss function and repeating the iterative steps.

Fig. 1

EP 4 765 039 A1

**Description**

FIELD OF THE INVENTION

The invention relates to medical imaging modalities such as magnetic resonance imaging and computed tomography, in particular to the generation of synthetic training images descriptive of subjects on a subject support.

BACKGROUND OF THE INVENTION

In recent years neural networks and other types of machine learning modules have begun to be used to assist in the acquisition of medical imaging systems such as magnetic resonance imaging, computed tomography, and other imaging modalities. The performance of such neural networks and machine learning modules increases with the amount and quality of training data. In contrast to other fields where training data can be harvested from the internet, it can be time consuming and costly to collect enough training data to effectively train machine learning modules for medical usage.

European patent publication EP3451209A1 discloses an apparatus comprising at least one processor, and at least one memory including computer program code, wherein the at least one memory and the computer program code are configured, with the at least one processor, to: train, using a set of training images a generative model network and a discriminator model network to generate a generic image for anonymizing an input image whilst maintaining unprocessed a condition and/or feature; and infer from the input image using the generative model network an output anonymized image.

SUMMARY OF THE INVENTION

The invention provides for a medical imaging method, a computer program product, and a medical system in the independent claims. Embodiments are given in the dependent claims.

In one aspect a medical imaging method is disclosed. The medical imaging method comprises receiving reference medical camera data. The reference medical camera data is descriptive of a subject on a subject support. The method further comprises receiving reference anatomical keypoint data in response to inputting the reference medical camera data into an anatomical keypoint detection neural network. The medical imaging method further comprises iteratively generating synthetic medical camera data. The iterative generation of the synthetic medical camera data comprises generating intermediate medical camera data by inputting the reference medical camera data into an image synthesis machine learning module.

The iterative method further comprises receiving intermediate anatomical keypoint data in response to inputting the intermediate medical camera data into the anatomical keypoint detection neural network. The iterative method further comprises calculating a loss function. The loss function is at least descriptive of a difference between the intermediate anatomical keypoint data and the reference anatomical keypoint data. The iterative method further comprises providing the intermediate medical camera data as synthetic medical camera data if the loss function meets a predetermined convergence criterion. If the loss function does not meet the predetermined convergence criterion then the iterative method further comprises modifying the image synthesis machine learning module using the loss function and repeating the iterative generation of the intermediate medical image data.

In another aspect, a computer program product is disclosed. The computer program product comprises a computer-readable storage medium having machine-executable instructions embodied therewith. The machine-executable instructions are configured to implement an example of the medical imaging method.

In another aspect, a medical system is disclosed. The medical system comprises a memory storing machine executable instructions. The medical system further comprises a computational system configured for controlling the medical system. The execution of the machine-executable instructions causes the computational system to receive reference medical camera data. The reference medical camera data is descriptive of a subject on a subject support. Execution of the machine-executable instructions further causes the computational system to receive reference anatomical keypoint data in response to inputting the reference medical camera data into the anatomical keypoint detection neural network. Execution of the machine-executable instructions further causes the computational system to iteratively generate synthetic medical camera data. The iterative generation comprises generating intermediate medical camera data by inputting the reference medical camera data into an image synthesis machine learning module.

The iterative synthesis further comprises receiving intermediate anatomical keypoint data in response to inputting the intermediate medical camera data into the anatomical keypoint detection neural. The iterative generation further comprises calculating a loss function. The loss function is at least descriptive of a difference between the intermediate anatomical keypoint data and the reference anatomical keypoint data. The iterative generation further comprises providing the intermediate medical camera data as synthetic medical camera data if the loss function meets a predetermined convergence criterion. The iterative generation further comprises modifying the image synthesis machine learning module using the loss function and repeating the iterative generation of the intermediate medical image data if the predetermined convergence criterion is not met.

BRIEF DESCRIPTION OF THE DRAWINGS

In the following preferred embodiments of the invention will be described, by way of example only, and with reference to the drawings in which:

Fig. 1 illustrates an example of a medical system.
Fig. 2 shows a flow chart which illustrates a method of using the medical system of Fig. 1.
Fig. 3 illustrates a further example of a medical system.
Fig. 4 illustrates a method of generating synthetic medical camera data.
Fig. 5 shows several images which illustrate the benefits of the methods illustrated in Figs. 2 and 4.

DETAILED DESCRIPTION OF EMBODIMENTS

Like numbered elements in these figures are either equivalent elements or perform the same function. Elements which have been discussed previously will not necessarily be discussed in later figures if the function is equivalent.
In one example there is a medical imaging method. The method comprises receiving reference medical camera data. The reference medical camera data is descriptive of a subject on a subject support. The reference medical camera data may encompass different types of camera data such as a normal two-dimensional color or RGB image. In other examples the reference medical camera data may also include such things as three-dimensional camera images. For example, the reference medical camera data may have been acquired by mounting a camera system above the subject and then imaging the subject on the subject support. The method further comprises receiving a reference anatomical keypoint data in response to inputting the reference medical camera data into an anatomical keypoint detection neural network.
Anatomical keypoints are key locations which identify significant locations on the subject such as a visible anatomical structure as an eye or nose as well as the location of various joints. Anatomical keypoint detection neural networks are known and are commercially available. They may be implemented using deep learning models, typically convolutional neural networks (CNNs) or transformers. Anatomical keypoint detection neural networks process input data to predict the coordinates of anatomical keypoints with high precision or may be used to provide probability maps which predict the location of such anatomical keypoints. They may be trained on large datasets annotated with these anatomical markers, enabling them to identify the keypoints even for diverse poses, lighting conditions, and body types. Keypoints may be positioned densely to represent an outline or an area of interest with a resolution depending on the chosen density
The method further comprises iteratively generating synthetic medical camera data. The steps to perform this iteration are listed below. The iterative generation comprises generating intermediate medical camera data by inputting the reference medical camera data into an image synthesis machine learning module. An image synthesis machine learning module is a machine learning module such as a neural network-based machine learning module that is used to generate synthetic images. The iterative generation further comprises receiving intermediate anatomical keypoint data in response to inputting the intermediate medical camera data into the anatomical keypoint detection neural network. This may for example be the same anatomical keypoint detection neural network that was used to generate the reference anatomical keypoint data. The iterative generation further comprises calculating a loss function. The loss function is at least descriptive of a difference between the intermediate anatomical keypoint data and the reference anatomical keypoint data. There are various means of generating synthetic images. For example, Generative Adversarial Networks (GANs) or diffusion-based methods are very common. In both of these methods a loss function may be used during the iterative generation of a synthetic image.
In this example, the loss function has been modified such that the loss function is at least dependent on the intermediate anatomical keypoint data and the reference anatomical keypoint data. This means that the loss function may be used to objectively measure how close the anatomical keypoints of the intermediate medical camera data is in comparison to the reference medical camera data. The iterative generation further comprises providing the intermediate medical camera data as a synthetic medical camera data if the loss function meets a predetermined convergence criterion. That is to say if the loss function indicates that the intermediate anatomical keypoint data and the reference anatomical keypoint data are close within a predetermined convergence criterion then the iterative process is finished and the intermediate medical camera data is provided as a synthetic medical camera data.
If the predetermined convergence criterion has not yet been met, the iterative generation further comprises modifying the image synthesis machine learning module using the loss function and repeating the iterative generation of the intermediate medical image data. So in this case, the predetermined convergence criterion has not yet been met, so the loss function is then used to modify the image synthesis machine learning module and the process is repeated until the predetermined convergence criterion is eventually met. The method may also for example be ended after a certain number of loops of the iterative process.

This example has a variety of benefits. Typically, it may be very difficult to obtain sufficient training data for training other machine learning modules. The synthetic medical camera data has a synthetic subject but the anatomical keypoint data matches the real or reference medical camera data. This means that the synthetic medical camera data has a realistic pose of the subject. This may for example be useful in providing for a larger variety of training data for other machine learning modules. It also opens a variety of possibilities. For example, a single subject may be imaged with a camera or video feed over a period of time and the subject may assume a variety of poses. Training the machine learning module with just these images may be helpful but the machine learning module could become biased for a particular subject or situation.

The synthetic medical camera data can be used to take different frames of a video stream which are then used to generate separate and distinct synthetic medical camera data. This means that a large variety of training data can be built up from a relatively small number of images. A further possible advantage is that the system may also be used to anonymize data and used to protect the privacy or confidentiality of a subject. For example, it may be used to generate synthetic data which may be used in place of data from a real subject which may be nonetheless useful for training machine learning modules.

In another example, the reference medical image data comprises label data descriptive of spatial positioning of the subject. The label data could for example provide information about specific anatomical keypoints or it could also provide for example a classification on the spatial positioning of the subject. For example, the label data might describe a type of pose or position of the subject. Additionally, it could also describe other objects or the type of procedure being performed on the subject. The medical imaging method further comprises providing training data by appending the label data to the synthetic medical camera data. This may be advantageous because the synthetic medical camera data then has valid label data that has been appended or associated with it. It may for example then be directly used as training data for a different machine learning module. As was mentioned above, the method could be performed on a series of images and then from each of these individual images different synthetic medical camera data could be generated. In this example, they are then all automatically labeled. This means that the synthetic medical camera data can be produced for training a machine learning module without human intervention.

In another example, the method further comprises storing the training data in a training data database. This may for example provide for a training database which provides an increased number of data available for training. The database may be implemented in different ways in different examples. In one case the training database is provided as a relational database. In other examples it could be a file or directory that is used to hold the training data collectively.

In another example, the method further comprises training a further machine learning module using the training data. In this step the synthetic medical camera data which has been labeled is then used to train a further machine learning module. The further machine learning module may then be trained using a larger number of training data or sets without the intervention of a human.

In another example, the further machine learning module is any one of the following: an object detection module, a further anatomical keypoint detection module, a pose prediction module, a body or body part segmentation module, and a body prediction module. The body prediction module may for example provide information about a subject's weight or other metadata which may be useful in configuring a medical imaging procedure. For example, a knowledge of the weight of the subject may in some instances be useful for magnetic resonance imaging or even CT scans.

In another example, the method further comprises positioning a subsequent subject on a subsequent subject support. The method further comprises acquiring subsequent medical imaging data using a subsequent camera system. The method further comprises receiving control data in response to inputting the subsequent medical camera data into the further machine learning module. The method further comprises controlling a medical imaging system to acquire a medical image of the subsequent subject. The tomographic medical imaging system is at least partially controlled using the control data. The method further comprises providing the tomographic medical image. In this example the training data was used to train the further machine learning module and then the further machine learning module was then used in part of the control loop for controlling the medical imaging system.

For example, if the further machine learning module detected the pose of a subject or anatomical keypoints it could be useful for controlling the positioning of the subject in the medical imaging system. As the larger amount of training data was generated automatically and then used to automatically further train the further machine learning module, the ability of the medical imaging system to acquire quality or better medical images has thereby been increased.

In another example, the image synthesis machine learning module is a conditional diffusion model. A conditional diffusion model may be used for altering part of an image operates by iteratively refining the target region while preserving the context of the unchanged areas. It may start by adding noise to the entire image and then denoising it step by step, guided by a conditioning input, such as a mask identifying the editable region or a textual/image prompt specifying the desired modification. During this process, the model ensures, via a loss function, that the generated content seamlessly integrates with the original image's surroundings, using the unmasked areas as constraints. This approach leverages learned priors from a large dataset to maintain coherence and realism, allowing targeted edits without disrupting the overall image structure. A conventional diffusion model may be modified for the present usage by including an additional term in the existing loss function dependent upon a difference between the intermediate anatomical keypoint data and the reference anatomical keypoint data.

In another example, the conditional diffusion model comprises a denoising neural network. Modifying the image synthesis machine learning module using the loss function comprises performing back propagation with the loss function to modify the denoising neural network. This example may be beneficial because it may provide for a means of more accurately generating the synthetic medical camera data.

In another example, the image synthesis machine learning module is an inpainting GAN. Inpainting GANs are specialized models designed to fill missing or corrupted regions in images with realistic content. They consist of a generator, which predicts the missing region, and a discriminator, which evaluates the realism of the inpainted result. During training, the generator learns to produce plausible and context-aware completions by optimizing against the discriminator's feedback and a reconstruction loss that ensures consistency with the known image parts.

In the present application, an object recognition neural network, such as a convolutional neural network implemented as a U-net or alternatively a ResNet could be trained to identify the region occupied by the subject. This could then be removed from the reference medical camera data. This altered image could then be used as the input to inpainting GAN.

In another example, modifying the image synthesis machine learning module using the loss function comprises running the image synthesis machine learning module with an optimization configured to minimize the loss function. Such an optimization may be used to modify the behavior of an inpainting GAN.

One possible implementation of an inpainting GAN is described below. Here, a person detector (i.e. a convolutional neural network trained to locate people) first produces a segmentation of all people or just the subject on the subject support in the input image, depending upon the example. These segmentation masks, along with a random latent variable vector, are fed into a 'generator' network that inserts a synthetic person into each mask. In this setting, the appearance of the synthetic person is entirely determined by the random latent vector, i.e., a different latent vector results in a different synthetic person in the corresponding mask. The iterative improvement of the anonymized image can then be controlled using the following optimization problem:

$$\min_{z \sim p_z} \log\big[1 - D\big(G(z)\big)\big] + \lambda \big\| H(I_0) - H\big(G(z)\big) \big\|_2 \qquad (1)$$

where D and G are the 'discriminator' and 'generator' networks, respectively, z is the latent variable vector, H is the activation pattern produced by the detector network, $I_0$ is the input camera image, and $\lambda$ is a regularization parameter that represents the trade-off between both targets.

The first term in Eq. (1) enforces the synthetic person to appear as realistic as possible, using the discriminator network as metric. The second term enforces the activation pattern of the detection neural network to be as close as possible to the original activation pattern. In other words, the generator network is constrained to produce the synthetic medical camera data that maintains the activation pattern of the original reference medical camera data.

The synthetic medical camera data can then be transferred outside of the clinical site without data privacy constraints. Since the activation pattern is essentially identical to the original camera image, it provides a realistic insight into the performance of the detection neural network after deployment. These insights can then be used for product improvements, e.g., retraining of the detection network to improve accuracy.

In another example, the method further comprises positioning the subject on the subject support and then acquiring the reference medical camera data using a camera system. In some examples, the method may also comprise generating or entering the label data for the reference medical camera data.

In another example, the reference medical camera data and/or the synthetic medical camera data are any one of the following: a two-dimensional image, a three-dimensional image, an RGB image, a grayscale image, and an infra-red image. This example is beneficial because these are all examples of types of medical camera data that may be generated synthetically according to an example.

In another example, the image synthesis machine learning module is any one of the following: configured to replace an entire body of the subject on the support and configured to replace at least one face in the referenced medical image data. In both examples, a new synthetic medical camera data is produced. Replacing the entire body of the subject may have the benefit that this may be more useful for training the subsequent machine learning module.

In another example, the reference anatomical keypoint data and/or the intermediate anatomical keypoint data is any one of the following: a set of probability maps indicating a likelihood for individual keypoints, a dense set of keypoints representing an outline or an area of interest, and a set of anatomical keypoint coordinates. These examples may be used to indicate anatomical keypoints. In the set of anatomical keypoints coordinates the actual coordinates within the image have been positively identified. A common method in medical imaging is to use the probability maps. By examining the probability map and, for example, searching for the center of mass of a large probability or looking for the highest probability, a particular individual keypoint can be identified. Typically, there may be a probability map for each individual keypoint. The probability maps can sometimes provide for higher accuracy because various geometrical relationships between the individual keypoints can be identified. For example, a minimization problem can be used to take into account both the likelihood within the probability maps as well as defining a mathematical relationship between the individual keypoints and this can be minimized to search for a more accurate determination of the individual keypoints.

If the anatomical keypoint data is a dense set of anatomical keyoints, it may be useful for identifying an outline of a subject or anatomical region or an area of interest registered to the subject. This may be particularly useful when setting or identifying the field of view for a medical imaging procedure.

In another example, there is a computer program product that comprises a computer-readable storage medium having machine-executable instructions stored in it. The machine-executable instructions are configured to implement the example of a method. This may be beneficial and may for example be used by a computer or other computational system to automate the method.

In various examples, the medical imaging method may be a computer-implemented method.

In further examples, a medical system may be provided by using the computer program product to implement a method by running the machine-executable instructions on a computational system.

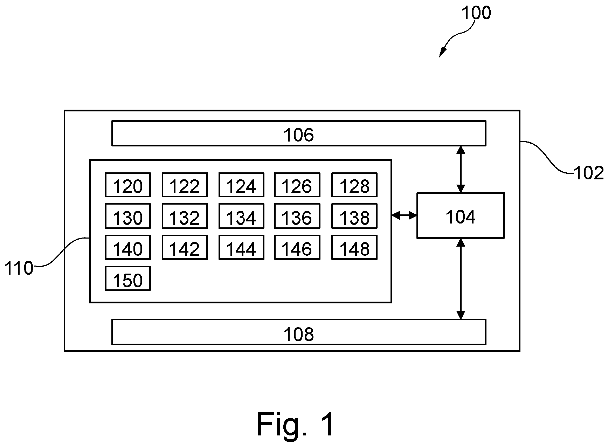

Fig. 1 illustrates an example of a medical system 100. The medical system is shown as comprising a computer 102. The computer 102 may represent one or more computers or computational systems located at one or more locations. The computer 102 comprises a computational system 104. The computational system 104 may represent one or more computing cores or computational systems also located at one or more locations. The computer 102 is further shown as comprising and optional hardware interface or network interface 106 that is in communication with the computational system 104. The hardware interface 106 may for example be used to control other components of the medical system 100 if they are present. For example, if the computer 102 were used to control a medical imaging system such as a computed tomography or magnetic resonance imaging system. The computer 102 is further shown as comprising an optional user interface 108 which may be used by an operator or controller to control the operation and function of the medical system 100. The computer 102 is further shown as comprising a memory 110 which is also shown as being in communication with the computational system 104. The memory 110 is intended to represent various types of memory which are accessible to the computational system 104. In some examples the memory 110 is a non-transitory storage medium.

The memory 110 is shown as storing machine-executable instructions 120. The machine-executable instructions 120 enable the computational system 104 to control other components of the medical system 100 if they are present as well as perform various numerical and image processing tasks. The memory 110 is further shown as storing reference medical camera data 122. This may for example have been received via the hardware interface / network interface 106. In other cases the medical system 100 may for example comprise a camera system and the data may then be received by using the hardware interface 106. The memory 110 is further shown as containing an anatomical keypoint detection neural network 124. The memory 110 is further shown as containing a set of reference anatomical keypoint data 126 that was received in response to inputting the reference medical camera data into the anatomical keypoint detection neural network 124.

The memory 110 is further shown as containing an image synthesis machine learning module 128 that may for example be configured for replacing a person reposing on a subject support. The memory 110 is further shown as containing an intermediate medical camera data 130 that was received in response to inputting the reference medical camera data 122 into the image synthesis machine learning module 128. The memory 110 is further shown as containing intermediate anatomical keypoint data 132 that was received in response to inputting the intermediate medical camera data 130 into the anatomical keypoint detection neural network 124. The memory 110 is further shown as containing a calculated loss function 134 that was calculated at least from a comparison between the intermediate anatomical keypoint data 132 and the reference anatomical keypoint data 126. The memory 110 is further shown as containing a predetermined criterion 136. This may for example be a threshold which the calculated loss function 134 is compared against. If the predetermined criterion 136 is met by the calculated loss function 134, the computational system 140 provides the intermediate medical camera data as the synthetic medical camera data 138. This is shown as being stored in the memory 110 also. If the predetermined criterion 136 is not met by the calculated loss function 134, the loss function 134 is used to modify the image synthesis machine learning module 128 and provide the modified image synthesis machine learning module 140. This is then used to reproduce the intermediate medical camera data 130 again and the process repeats until the predetermined criterion 136 is satisfied.

Features 142, 144, 146, 148, and 150 are optional. The memory 110 is further shown as containing the label data 142. The label data may for example be keypoint locations, for example in some cases the reference anatomical keypoint data 126 could be chosen as the label data. In other cases, the label data may provide various metadata descriptive of the subject as well as other things such as the pose of the subject reposing on a subject support. The memory 110 is further shown as containing training data 144 that was constructed by appending or associating the label data 142 with the synthetic medical camera data 138. This process may for example be repeated multiple times and the resulting training data 144 may be stored in a training data database 146. The training data database 146 may, for example, in some instances, be a relational database. In other cases, it may simply be a collection of data which is stored in a particular directory or is stored in another manner and may be useful for a training algorithm of a machine learning module.

The memory 110 is further shown as containing a further machine learning module 148. The term 'further' is a user label to differentiate it from the image synthesis machine learning module 128, 140. The further machine learning module 148 may be trained using the training data 144 or additionally the larger amount of data in the training data database 146 to provide a trained further machine learning module 150. This trained further machine learning module 150 may for example have different abilities such as providing anatomical keypoints or providing metadata or other qualities of the subject being imaged.

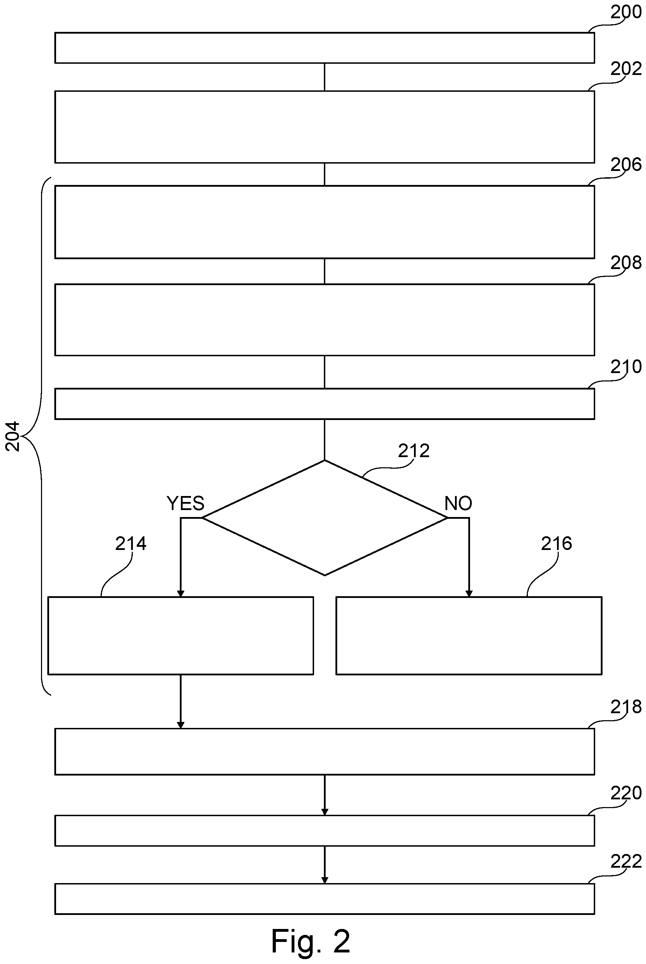

Fig. 2 shows a flowchart which illustrates a method of operating the medical system 100 of Fig. 1. In step 200, the reference medical camera data 122 is received. In step 202, the reference anatomical keypoint data 126 is received in response to inputting the reference medical camera data 122 into the anatomical keypoint detection neural network 124. Steps 206, 208, 210, 212, 214, and 216 represent an alternative method of generating a synthetic medical camera data 138. In step 206, the intermediate medical camera data 130 is generated by inputting the reference medical camera data 122 into the image synthesis machine learning module 128. In step 208, the intermediate anatomical keypoint data 132 is received in response to inputting the intermediate medical camera data 130 into the anatomical keypoint detection neural network 124. In step 210, the loss function 134 is calculated.

The loss function 134 is at least dependent on or descriptive of the differences between the intermediate anatomical keypoint data 132 and the reference anatomical keypoint data 126. In step 212, the loss function 134 is compared to the predetermined criterion 136. If the predetermined criterion 136 is met, the method proceeds to step 214. If the predetermined convergence criterion of the loss function 134 is not met, the method proceeds to step 216. In step 216, the image synthesis machine learning module 128 is modified using the loss function 134. The method then proceeds back to step 206 and the iterative method 204 repeats.

When the predetermined convergence criterion 136 is met, step 214 is performed and the intermediate medical camera data 130 is provided as the synthetic medical camera data 138. Steps 218, 220, and 222 are optional. In step 218, the training data 144 is provided by appending label data 142 of the reference medical camera data 122 to the synthetic medical camera data 138. In step 220, the training data 144 is stored in a training data database 146. In step 222, the further machine learning module 148 is trained using the training data 144. There may also be an additional step of providing the further machine learning module as a trained further machine learning module 150.

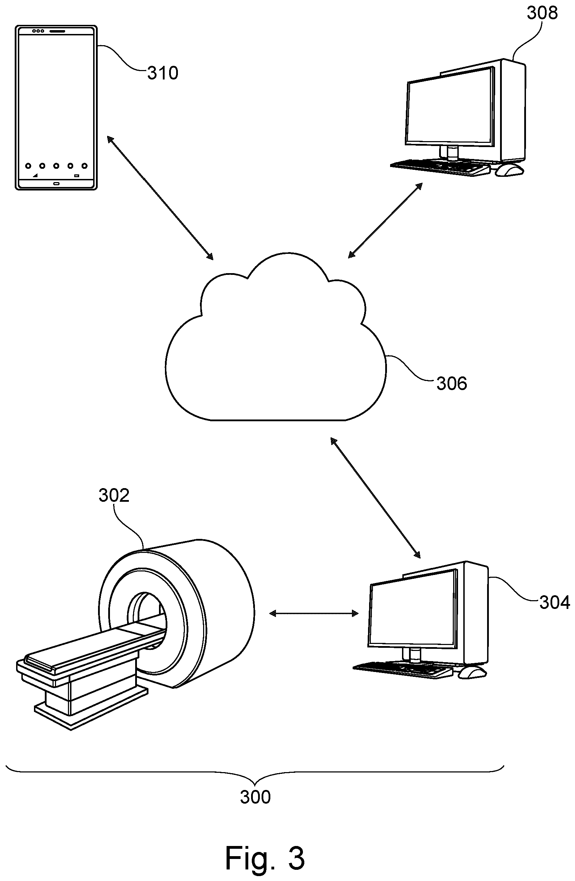

Fig. 3 illustrates a further example of a medical system 300. This medical system is shown as comprising a medical imaging system 302 controlled by a local controller 304. The local controller 304 is connected, for example, via the internet or other networking system to a cloud computing system 306, a workstation 308, and a handheld telecommunications device 310. The handheld telecommunications device 310 may for example be a smartphone or tablet computer. The functionality illustrated in the medical system 100 may for example be distributed amongst the local controller 304, the cloud computing system 306, the workstation 308, and/or the handheld telecommunications device 310. The various steps illustrated in Fig. 2 may therefore also be distributed among these various devices and need not be performed on a single machine. In some examples, the trained further machine learning module 150 is used by the local controller 304 during control of the medical imaging system 302.

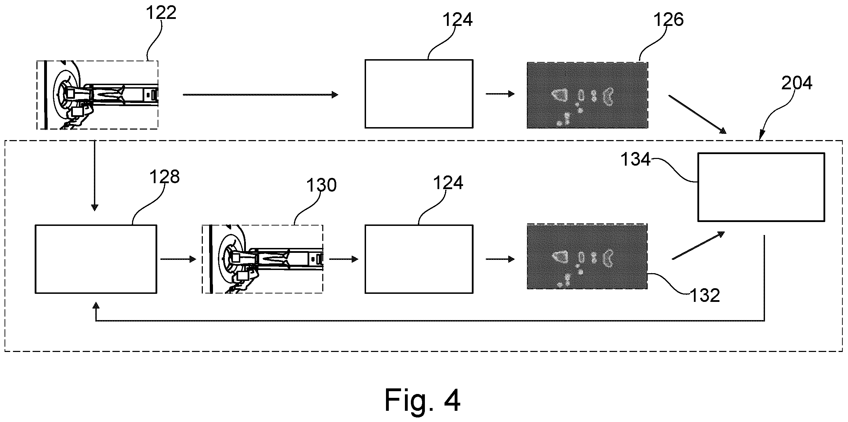

Fig. 4 further illustrates how the synthetic medical camera data 138 may be generated. The dashed line 204 represents steps performed in the iterative method of generating synthetic medical camera data 138. The reference medical camera data 122 is input into the anatomical key point detection neural network 124 to generate the reference anatomical keypoint data 126. In this example it shows a probability distribution for various keypoints. The reference medical camera data 122 is also input into the image synthesis machine learning module 128. This produces the intermediate medical camera data 130. The intermediate medical camera data 130 is then input also into the anatomical keypoint detection neural network 124 to produce the intermediate anatomical keypoint data 132.

A comparison between the reference anatomical keypoint data 126 and the intermediate anatomical keypoint data 132 is used to determine or calculate the loss function 134. This is at least partially a measure of how close the intermediate anatomical keypoint data 132 is to the reference anatomical keypoint data 126. If this loss function 134 does not meet the predetermined criterion 136, then the loss function 134 is used to modify or change the image synthesis machine learning module 128. A typical way of implementing the image synthesis machine learning module 128 would be a GAN or a diffusion model. In both cases the loss function 134 may be useful in modifying their behavior.

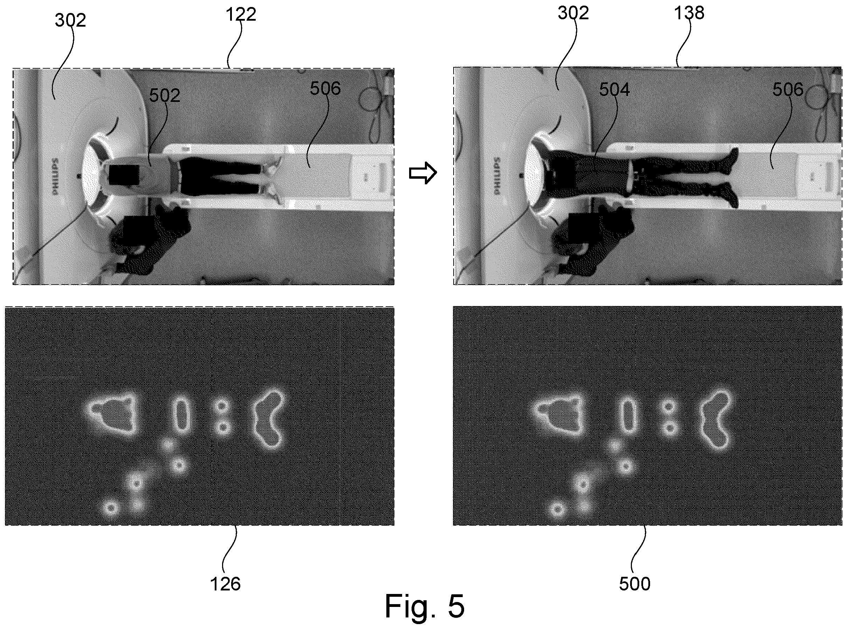

Fig. 5 is used to show a comparison between the reference medical camera data 122 and the synthetic medical camera data 138 as generated by a GAN neural network. The reference medical camera data 122 depicts a subject 502 reposing on a subject support 506 and is about to be inserted into the medical imaging system 302. The synthetic medical camera data 122 depcits the same sscene, except that the subject 502 has been replaced with a synthetic subject 504.It can be seen that the synthetic medical camera data 138 in comparison to the reference medical camera data 122 is very convincing and appears as a natural photograph.

More importantly, below these two images 122, 138, is the reference anatomical keypoint data 126 and the anatomical keypoint data of the synthetic medical camera data 138. Comparing these two anatomical keypoint data 126, 500, they look virtually identical. This illustrates how the modification of the loss function 134 can be used to force an image synthesis machine learning module 128 to produce images which have, for all intents and purposes, identical anatomical keypoint data 126, 500.

It is understood that one or more of the aforementioned examples or embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational systems to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the C programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a Local Area Network (LAN) or a Wide Area Network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a computational system of a general-purpose computer, special-purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include but are not limited to: a universal serial bus, IEEE 1394 port, parallel port, IEEE 1284 port, serial port, RS-232 port, IEEE-488 port, Bluetooth connection, WLAN connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and/or tactile data. Examples of a display include, but are not limited to: a computer monitor, television screen, touch screen, tactile electronic display, Braille screen, Cathode Ray Tube (CRT), storage tube, bi-stable display, electronic paper, vector display, flat panel display, Vacuum Fluorescent (VD) display, Light-Emitting Diode (LED) displays, Electro-Luminescent Display (ELD), Plasma Display Panels (PDP), Liquid Crystal Display (LCD), Organic Light-Emitting Diode (OLED) displays, a projector, and head-mounted display.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

REFERENCE SIGNS LIST

| | |
|---|---|
| 100 | medical system |
| 102 | computer |
| 104 | computational system |
| 106 | optional hardware interface / network interface |
| 108 | optional user interface |
| 110 | memory |
| 120 | machine executable instructions |
| 122 | reference medical camera data |
| 124 | anatomical keypoint detection neural network |
| 126 | reference anatomical keypoint data |
| 128 | image synthesis machine learning module |
| 130 | intermediate medical camera data |
| 132 | intermediate anatomical keypoint data |
| 134 | loss function |
| 136 | predetermined criterion |
| 138 | synthetic medical camera data |
| 140 | modified image synthesis machine learning module |
| 142 | label data |
| 144 | training data |
| 146 | training data database |
| 148 | further machine learning module |
| 150 | trained further machine learning module |
| 200 | receiving reference medical camera data |
| 202 | receiving reference anatomical keypoint data in response to inputting the reference medical camera data into an anatomical keypoint detection neural network |
| 204 | iteratively generate synthetic medical camera data |
| 206 | generating intermediate medical camera data by inputting the reference medical camera data into an image synthesis machine learning module |
| 208 | receiving intermediate anatomical keypoint data in response to inputting the intermediate medical camera data into the anatomical keypoint detection neural network |
| 210 | calculating a loss function, wherein the loss function is at least descriptive of a difference between the intermediate anatomical keypoint data and the reference anatomical keypoint data |
| 212 | predetermined convergence criterion met? |
| 214 | providing the intermediate medical camera data as synthetic medical camera data |
| 216 | modifying the image synthesis machine learning module using the loss function |
| 218 | provide training data by appending the label data to the synthetic medical camera data |
| 220 | store the training data in a training data database |
| 222 | train a further machine learning module using the training data |
| 300 | medical system |
| 302 | medical imaging system |
| 304 | local controller |
| 306 | cloud |
| 308 | workstation |
| 310 | handheld telecommunications device |
| 500 | anatomical keypoint data of synthetic medical camera data |
| 502 | subject |
| 504 | subject support |
| 506 | synthetic subject |

**Claims**

1. A medical imaging method, comprising:

   - receiving (200) reference medical camera data (122), wherein the reference medical camera data is descriptive of a subject (502) on a subject support (504);
- receiving (202) reference anatomical keypoint data (126) in response to inputting the reference medical camera data into an anatomical keypoint detection neural network (124);
- iteratively generate (204) synthetic medical camera data (138) by:

    - generating (206) intermediate medical camera data (130) by inputting the reference medical camera data into an image synthesis machine learning module (128);
    - receiving (208) intermediate anatomical keypoint data (132) in response to inputting the intermediate medical camera data into the anatomical keypoint detection neural network;
    - calculating (210) a loss function (134), wherein the loss function is at least descriptive of a difference between the intermediate anatomical keypoint data and the reference anatomical keypoint data;
    - providing (214) the intermediate medical camera data as the synthetic medical camera data (138) if the loss function meets (212) a predetermined convergence criterion; and
    - otherwise, modifying (216) the image synthesis machine learning module using the loss function and repeat the iterative generation of the intermediate medical image data.

2. The medical imaging method of claim 1, wherein the reference medical image data comprises label data (142) descriptive of spatial positioning of the subject, wherein the method further comprises:

    - providing (218) training data (144) by appending the label data to the synthetic medical camera data; and
    - preferably (220) storing (220) the training data in a training data database (146).

3. The medical imaging method of claim 2, wherein the method further comprises training (222) a further machine learning module (148) using the training data.

4. The medical imaging method of claim 3, wherein the further machine learning module is any one of the following: an object detection module, a further anatomical keypoint detection module, a pose prediction module, a body or body part segmentation module, and a body prediction module.

5. The medical imaging method of any one of the preceding claims, wherein the method further comprises:

    - positioning a subsequent subject on a subsequent subject support;
    - acquiring subsequent medical imaging data using a subsequent camera system;
    - receive control data in response to inputting the subsequent medical camera data into the further machine learning module;
    - controlling a medical imaging system to acquire a medical image of the subsequent subject, wherein the tomographic medical imaging system is at least partially controlled using the control data; and
    - provide the tomographic medical image.

6. The method of any one of the preceding claims, wherein the image synthesis machine learning module is a conditional diffusion model.

7. The method of claim 6, wherein the conditional diffusion model comprises a denoising neural network, wherein modifying the image synthesis machine learning module using the loss function comprises performing back propagation with the loss function to modify the denoising neural network.

8. The method of any one of claims 1 through 5, wherein the image synthesis machine learning module is an inpainting generative adversarial network (GAN).

9. The method of claim 8, wherein modifying the image synthesis machine learning module using the loss function comprises running the image synthesis machine learning module within an optimization configured to minimize the loss function.

10. The method of any one of the preceding claims, wherein the method further comprises:

    - positioning the subject on a subject on the subject support; and
    - acquiring the reference medical camera data using a camera system.

11. The method of any one of the preceding claims, wherein the reference medical camera data and/or the synthetic medical camera data are any one of the following: a two-dimensional image, a three-dimensional image, an RGB image, and an infrared image.

12. The method of any one of the preceding claims, wherein the image synthesis machine learning module is any one of the following:

- configured to replace an entire body of the subject on the support, and
- configured to replace at least one face in the reference medical image data.

13. The method of any one of the preceding claims, wherein the reference anatomical keypoint data and/or the intermediate anatomical keypoint data is any one of the following: a set of probability maps indicating a likelihood for individual keypoints, a dense set of keypoints representing an outline or an area of interest, and a set of anatomical keypoint coordinates.

14. A computer program product comprising a computer-readable storage medium (110) having machine executable instructions (120) embodied therewith, said machine executable instructions are configured to implement the method of any one of claims 1 through 13.

15. A medical system (100, 300) comprising:

- a memory (110) storing machine executable instructions (120);
- a computational system (104) configured for controlling the medical system,

wherein the execution of the machine executable instructions causes the computational system to:

- receive (200) reference medical camera data (122), wherein the reference medical camera data is descriptive of a subject (502) on a subject support (504);
- receive (202) reference anatomical keypoint data (126) in response to inputting the reference medical camera data into an anatomical keypoint detection neural network (124);
- iteratively generate (204) synthetic medical camera data (138) by:

- generating (206) intermediate medical camera data (130) by inputting the reference medical camera data into an image synthesis machine learning module (128);
- receive (208) intermediate anatomical keypoint data (132) in response to inputting the intermediate medical camera data into the anatomical keypoint detection neural network;
- calculate (210) a loss function (134), wherein the loss function is at least descriptive of a difference between the intermediate anatomical keypoint data and the reference anatomical keypoint data;
- provide (212) the intermediate medical camera data as the synthetic medical camera data if the loss function meets a predetermined convergence criterion (136); and
- otherwise, modify (214) the image synthesis machine learning module using the loss function and repeat the iterative generation of the intermediate medical image data.

100

102

| 106 |
| --- |

110

| 120 | 122 | 124 | 126 | 128 |
| 130 | 132 | 134 | 136 | 138 |
| 140 | 142 | 144 | 146 | 148 |
| 150 |

104

| 108 |
| --- |

Fig. 1

Fig. 2

Fig. 3

Fig. 4

Fig. 5

# EUROPEAN SEARCH REPORT

**Application Number**

**EP 24 22 0676**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/312659 A1 (SOMMER KARSTEN [DE] ET AL) 7 October 2021 (2021-10-07) | 1,6-15 | INV.<br>G06V10/774<br>G06V10/82<br>G06V20/52<br>G06V40/10 |
| A | * paragraph [0060] *<br>* paragraph [0070] *<br>* paragraph [0092] - paragraph [0095] *<br>* paragraph [0100] * | 2-5 | |
| | ----- | | |
| Y | BENSAID EMNA ET AL: "FaceAnonym: Face Anonymization Model via Latent Space Mapping",<br>2023 INTERNATIONAL CONFERENCE ON CYBERWORLDS (CW), IEEE,<br>3 October 2023 (2023-10-03), pages 480-483, XP034484088,<br>DOI: 10.1109/CW58918.2023.00079<br>[retrieved on 2023-12-06]<br>* the whole document * | 1,6-15 | |
| | ----- | | |

**TECHNICAL FIELDS SEARCHED (IPC)**

G06V

The present search report has been drawn up for all claims

| Place of search | Date of completion of the search | Examiner |
|---|---|---|
| The Hague | 20 May 2025 | Koutroumpas, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 0676

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2025

| Patent document cited in search report | Publication date | Patent family member(s) | | Publication date |
|---|---|---|---|---|
| US 2021312659 A1 | 07-10-2021 | CN | 112262410 A | 22-01-2021 |
| | | EP | 3671641 A1 | 24-06-2020 |
| | | EP | 3776466 A1 | 17-02-2021 |
| | | JP | 7008882 B1 | 25-01-2022 |
| | | JP | 2022508337 A | 19-01-2022 |
| | | US | 2021312659 A1 | 07-10-2021 |
| | | WO | 2020126853 A1 | 25-06-2020 |

EPO FORM P0459

For more details about this annex : see Official Journal of the European Patent Office, No. 12/82

**REFERENCES CITED IN THE DESCRIPTION**

**Patent documents cited in the description**

- EP 3451209 A1